(19) **Europäisches Patentamt / European Patent Office / Office européen des brevets**

(11) **EP 3 328 702 B1**

(12) **EUROPÄISCHE PATENTSCHRIFT**

(45) Veröffentlichungstag und Bekanntmachung des Hinweises auf die Patenterteilung:
**31.03.2021 Patentblatt 2021/13**

(21) Anmeldenummer: **16739137.4**

(22) Anmeldetag: **15.07.2016**

(51) Int Cl.:
**B60T 17/22** *(2006.01)*

(86) Internationale Anmeldenummer:
**PCT/EP2016/066853**

(87) Internationale Veröffentlichungsnummer:
**WO 2017/016899 (02.02.2017 Gazette 2017/05)**

(54) **VERFAHREN UND SYSTEM ZUR ANALYSE DES VERSCHLEISSVERHALTENS VON BREMSBELÄGEN**

METHOD AND SYSTEM FOR ANALYSING THE WEAR BEHAVIOUR OF BRAKE LININGS

PROCÉDÉ ET DISPOSITIF D'ANALYSE DU COMPORTEMENT À L'USURE DE GARNITURES DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2015 DE 102015112232**

(43) Veröffentlichungstag der Anmeldung:
**06.06.2018 Patentblatt 2018/23**

(73) Patentinhaber: **KNORR-BREMSE Systeme für Nutzfahrzeuge GmbH**
**80809 München (DE)**

(72) Erfinder:
- SCHÖNAUER, Manfred
  **80995 München (DE)**
- PAHLE, Wolfgang
  **83707 Bad Wiessee (DE)**
- DRESEN, Dirk
  **51375 Leverkusen (DE)**

(56) Entgegenhaltungen:
EP-A1- 0 859 164    DE-A1- 4 316 993
DE-A1- 10 127 480    DE-A1-102009 011 986
DE-U1- 20 208 841

**Beschreibung**

Die Erfindung betrifft ein Verfahren, mit dem eine Analyse des Verschleißverhaltens von Bremsbelägen und ein Bremssystem zur Durchführung des Verfahrens erfolgen.

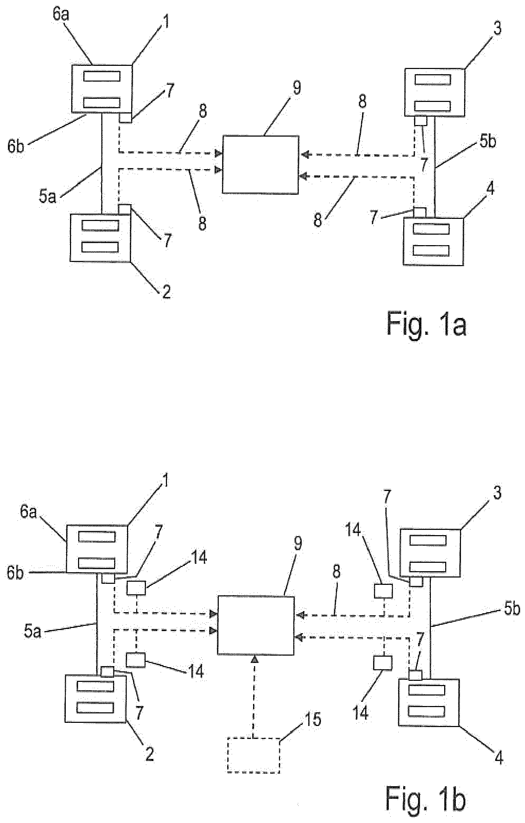

Fig. 1 zeigt ein Fahrzeugbremssystem für ein Fahrzeug mit hier beispielhaft vier auf zwei Achsen 5a (Vorderachse, auch als VA bezeichnet), 5b (Hinterachse, auch HA) verteilten Scheibenbremsen 1, 2, 3, 4, die jeweils zwei Bremsbeläge 6a, 6b aufweisen. Diese Bremsbeläge 6a, 6b werden bei Bremsungen jeweils gegen hier nicht dargestellte Bremsscheiben der Scheibenbremsen 1 - 4 gepresst, um das Fahrzeug abzubremsen. Infolge der Bremsungen verschleißen die Bremsbeläge 6a, 6b und die Bremsscheibe. Um den Verschleiß der Bremsbeläge 6a, 6b und der Bremsscheibe als Summensignal zu ermitteln, ist es bekannt, Verschleißsensoren 7 an den vier Scheibenbremsen 1 - 4 jeweils über eine Verbindung wie Kabel 8 oder drahtlos an eine Auswertungseinrichtung 9 anzuschließen. Diese kann - bei dem Stand der Technik und auch bei der Erfindung -als Teil eines übergeordneten, hier nicht weiter dargestellten - Fahrzeugzustandsermittlungs- und -informationssystems ausgelegt sein.

Nach dem in Fig.1 abgebildeten Stand der Technik ist vorgesehen, dass die vier Scheibenbremsen 1 - 4 jeweils einen der Belagverschleißsensoren 7 - nachfolgend auch Einzelsensor genannt - aufweisen, deren Ausgänge jeweils über eines der Kabel 8 an die Auswertungseinrichtung 9 angeschlossen sind, so dass an dieser im Betrieb des Fahrzeugs Informationen über den jeweiligen Verschleißzustand der Bremsbeläge 6a, 6b der Scheibenbremsen bereitstehen (siehe z.B. die EP 0 590 388 B1). Mit einem nicht dargestellten Endkontakt wird ermittelt, ob der Verschleiß der Beläge so weit fortgeschritten ist, dass ein Belagwechsel erforderlich ist. In diesem Fall wird ein entsprechendes Warnsignal ausgegeben und der Auswertungseinrichtung 9 zugeführt. Die Auswertungseinrichtung 9 gibt beim Erreichen eines vorgegebenen Restverschleißmaßes der Bremsbeläge über eine Ausgabeeinrichtung wie ein Display ein Signal zur Anzeige eines anstehenden Belagwechsels aus, um Beschädigungen an Bremse, Bremsenteilen und Bremsscheibe zu verhindern und um ein Durchziehen der abgefahrenen Bremsbeläge durch eine zu große Abnutzung zu vermeiden. Bekannte Verschleißsensoren - insbesondere deren Endkontakte - sind allerdings relativ teuer und erfordern einen relativ hohen Montageaufwand.

Aus der DE 101 50 047 A1 ist es auch bekannt, die bei einer Bremsung auftretende Energie zu ermitteln, einen Vergleich dieser Bremsenergie mit einem Bremsenergiegrenzwert durchzuführen und im Falle eines Überschreitens dieses Grenzwertes eine Nachstellbewegung zum Ausgleich des aufgetretenen Verschleißes durchzuführen.

Nach einer Variante der DE 101 50 047 A1 wird die Bremsenergie ohne zusätzliche Sensoren direkt aus dem Bremsmoment und dem Raddrehwinkel errechnet. Bevorzugt wird dazu der Raddrehwinkel mittels eines ABS-Systems mit einem Polradsensor ermittelt, der bei modernen Bremssystemen stets vorhanden ist und von daher keinen apparativen Mehraufwand bedeutet. Ebenfalls bevorzugt wird das Bremsmoment auf einfache Weise aus dem Bremszylinderdruck ermittelt, welcher einem EBS- oder ABS-Steuerungsrechner bzw. einer Steuerungseinrichtung (welche eine entsprechende Softwareroutine als Auswertungseinrichtung aufweisen kann) ebenfalls zugeleitet. Zweckmäßig - dies kann empirisch ermittelt werden - wird eine Nachstellung jeweils beim Überschreiten eines Energiegrenzwertes von 2 bis 8 MJ, insbesondere 5MJ eingeleitet, um einerseits die Häufigkeit der Nachstellvorgänge relativ gering zu halten und um andererseits stets eine genügende Bremssicherheit aufrecht zu erhalten.

Die Bremsenergie wird nach der DE 101 50 047 A1 - und dieses Verfahren ist auch erfindungsgemäß beispielhaft gut einsetzbar - näherungsweise aus dem Drehzahlsignal und dem Bremsdrucksignal ermittelt:

$$W_B = M_B \, \varphi_B,$$

wobei

$W_B$ := Bremsenergie;
$M_B$ := Bremsmoment;
$\varphi_B$ := Raddrehwinkel.

Der Raddrehwinkel wird unmittelbar über einen z.B. für eine ABS- und/oder EBS-Funktion eines Bremssystems zur Bremsregelung sowieso benötigten und daher bereitstehenden Drehzahlsensor bestimmt. Der Drehzahlsensor besteht aus einem Polrad, welches mit der Radnabe umläuft und einem feststehenden Geber, der die vorbei bewegten Zähne, Magnetspulen usw. des Polrades mit einem Spannungsimpuls registriert. Bei z.B. 100 Zähnen pro Polrad entspricht somit ein Impuls einem Raddrehwinkel von 3,6°. Durch Aufsummieren dieser Impulse wird von der Auswertungseinrichtung der Raddrehwinkel während der Bremsphase ermittelt.

Das Bremsmoment wird vorzugsweise mittels des in einem ABS-/EBS-System vorhandenen Drucksensors mit der Auswertungseinrichtung durch Ermittlung des Bremszylinderdruckes nach folgender Formel berechnet:

$$M_B \quad = \quad (P_Z - P_{An}) \, A_Z \, i \, \varepsilon \, C^* \, r_{eff},$$

wobei:

$P_Z$ = Druck im Bremszylinder und
$P_{An}$ = Anlegedruck der Bremse
$i$ = Kraftübersetzungsverhältnis der Bremse

$\varepsilon$ = mechanischer Wirkungsgrad des Kraftübersetzungsmechanismus der Bremse
$C^*$ = Bremsenkennwert $\approx 2 \times \mu_B$
$\mu_B$ = Reibungswert des Bremsbelages
$r_{eff}$ = wirksamer Reibradius der Bremsscheibe
$Z$ = Anzahl der aufsummierten Drehwinkelimpulse eines ABS-Polrades
$A_Z$ = wirksame Kolbenfläche des Bremszylinder.

Zudem kann die pro Drehung entsprechend einem Zahn eines ABS-Polrades, also die pro Drehzahlimpuls, umgesetzte Bremsenergie wie folgt ermittelt werden

$$W = (P_Z - P_{An})\, K$$

Wobei:

$K$ = $A_Z\, i\, \varepsilon\, C^*\, r_{eff}\, 2\pi/n$;
$P_Z$ = Druck im Bremszylinder und
$P_{An}$ = Anlegedruck der Bremse

Die umgesetzte Bremsenergie wird somit durch einfache Verknüpfungen des Bremszylinderdruck-Signales mit der Anzahl der Raddrehimpulse ermittelt.

Die angegebenen Formeln sind beispielhaft und müssen nicht zwingend für die Ermittlung der Bremsenergie verwendet werden. Sie eignen sich für Scheibenbremsen mit elektromotorischer oder pneumatischer Betätigung sowie mit einem Schwimm-, Fest- oder Schiebesattel. Vorzugsweise umfasst das Nachstellsystem auf beiden Seiten der Bremsscheibe jeweils wenigstens eine der elektromotorische Nachstelleinrichtungen.

Aus der DE 199 33 396 A1 ist es auch bekannt, aus der Bremsenergie den Gesamtverschleiß von Bremsbelägen, aufsummiert über sämtliche Bremsungen seit einem Belagwechsel - zu ermitteln.

Die DE 43 16 993 A1 offenbart ein Verfahren zur Analyse des Verschleißverhaltens eines Bremssystems mit Bremsen mit Bremsbelägen, die aus einer einzigen Reibmaterialschicht bestehen, bei dem eine Ermittlung der Bremsenergie und eine anschliessende Auswertung des ermittelten Ergebnisses erfolgen.

Vor diesem Hintergrund ist es die Aufgabe der Erfindung, ein einfaches Verfahren und ein Bremssystem zu schaffen, mit denen auffällige Entwicklungen im Belagverschleißverhalten der Bremsbeläge mit zwei oder mehr Reibmaterialschichten einfach erkennbar sind.

Die Erfindung erreicht dieses Ziel in Hinsicht auf das Verfahren durch den Gegenstand des Anspruchs 1 und in Hinsicht auf das Bremssystem durch den Gegenstand des Anspruchs 6.

Bevorzugt werden als die eingesetzten Bremsen Scheibenbremsen, insbesondere druckluftbetätigte Scheibenbremsen verwendet, bei welchen es mit dem angegebenen Verfahren besonders gut möglich ist, den Verschleiß an den Bremsen zu überwachen und einen Belagwechsel rechtzeitig anzuzeigen. Die Erfindung ist aber prinzipiell auch für Trommelbremsen geeignet.

Zum Erzielen unterschiedlicher Reibwerte können die Reibmaterialschichten vollflächig oder abschnittsweise aus unterschiedlichen Reibmaterialien bestehen.

Mit der Erfindung wird eine Weiterentwicklung eines Bremssystems mit Belagverschleißsensor mit Einzelsensoren in den Bremsbelägen geschaffen. Dabei wird der Stand der Technik nach der DE 101 50 047 A1 und der DE 199 33 396 A1 in einfacher Weise in Hinsicht auf ein einfaches Erkennen von Auffälligkeiten im Verschleißverhalten der Bremsbeläge weiterentwickelt.

Wird der mit den Verschleißsensoren ermittelte Verschleiß je Bremse mit dem Energieeintrag bei den Bremsungen in Bezug gesetzt, ergibt sich mit zunehmender Fahrleistung je Rad bzw. je Scheibenbremse 1 - 4 der Vorder- und der Hinterachse jeweils eine Kurve, oftmals jedenfalls abschnittweise eine Gerade, deren Steigung bzw. Gradient für das jeweils eingesetzte Reibmaterial bzw. den jeweiligen Reibwert spezifisch ist. Wechselt daher das Reibmaterial an einem Übergang zwischen zwei Reibmaterialschichten, verändert sich auch die Steigung der Kurve signifikant.

Nach einer vorteilhaften Weiterbildung entspricht die Dicke einer äußeren der Reibmaterialschichten des wenigstens einen Bremsbelages 6a, 6b - oder mehrerer, insbesondere sämtlicher Bremsbeläge 6a, 6b des Fahrzeugs und vorzugsweise seines Anhängers - einem Endverschleißmaß des Bremsbelages oder der Bremsbeläge 6a, 6b und es wird ein Signal ausgegeben, wenn das Erreichen des Endverschleißmaßes an wenigstens einem der Bremsbeläge 6a, 6b erkannt wird. Bei einem Überschreiten der Grenze von einer Reibmaterialschicht zur anderen erkennt das Bremssystem somit über einen (z.B. in regelmäßigen Intervallen, insbesondere Kilometerintervallen) durchgeführten Vergleich der Verschleißgradienten eine Änderung. Vorzugsweise wird dann eine definierte Aktion wie das Anzeigen einer Warnung "Bremsbelagwechsel innerhalb der nächsten X km" ausgelöst.

Bevorzugt sind die eingesetzten Bremsen Scheibenbremsen. Die Erfindung ist aber auch für Trommelbremsen prinzipiell geeignet. Besonders vorteilhaft ist es, wenn die Scheibenbremsen als druckluftbetätigte Scheibenbremsen ausgebildet sind.

Vor allem bei einem ungleichen Verschleiß von zuspannseitigem und sattelaussenseitigem Bremsbelag ist diese Art der Endverschleißerkennung sinnvoll, da sonstige heute eingesetzte Verschleißerfassungssysteme in der Regel nur den Summenverschleiß beider Bremsbeläge und der Bremsscheibe erfassen können.

Reibbeläge mit je nach Verschleißgrad unterschiedlichen Reibwerten offenbart die EP 0 859 164 A1.

Vorteilhafte Ausgestaltungen und Weiterbildungen sind in den Unteransprüchen angegeben.

Nachfolgend wird die Erfindung unter Bezug auf die Zeichnung anhand von Ausführungsbeispielen näher beschrieben. Es zeigen:

Fig.1a      eine stark schematisierte und vereinfachte Darstellung eines bekannten Fahrzeugbremssystems;

Fig.1a      eine stark schematisierte und vereinfachte Darstellung eines erfindungsgemäßen Fahrzeugbremssystems;

Fig.2      eine Draufsicht auf einen Bremsbelag für ein Fahrzeug;

Fig. 3 - 8      Diagramme, welche einen Verschleiß des Belagmaterials in % des Belagmaterials in Abhängigkeit von der Laufleistung eines Fahrzeugs anzeigen.

**Fig. 1b** zeigt ein Fahrzeugbremssystem mit vier auf zwei Achsen 5a, b verteilten Scheibenbremsen 1, 2, 3, 4, die jeweils zwei Bremsbeläge 6a, 6b aufweisen. Diese sind bei Bremsungen reibend gegen eine hier nicht dargestellte Bremsscheibe zu pressen.

Wie nach dem Stand der Technik der Fig.1a ist vorgesehen, dass die vier Scheibenbremsen 1 bis 4 jeweils einen Verschleißsensor 7 aufwiesen, dessen Ausgang an die Auswertungseinrichtung 8 angeschlossen ist, so dass an diese im Betrieb des Fahrzeugs eine Information über den jeweiligen Verschleißzustand der Scheibenbremsen 1 bis 4 bereitsteht. Es kann nach einer Variante der Erfindung auf Endkontakte der Verschleißsensoren verzichtet werden, was zu einer Kostensenkung führt, obwohl es alternativ auch denkbar ist, diese beizubehalten.

Erfindungsgemäß wird einerseits über einen Verschleißsensor 7 nach wie vor der momentane Summenverschleiß der beiden Beläge und der Bremsscheibe ermittelt, insbesondere wie vorstehend erläutert. Dieser Wert wird aber nicht isoliert betrachtet. Es wird vielmehr auch eine Energiebetrachtung durchgeführt. Es werden daher beispielsweise an der Auswertungseinrichtung 9 auch Signale über den Drehwinkel der Fahrzeugräder (Drehwinkelsensor 14 an den Rädern bzw. in der Nähe der Scheibenbremsen 1 - 4) und vorzugsweise über das Bremsmoment (Drucksensor 16) sowie vorzugsweise eine Information über die Gesamtlaufleistung des Fahrzeuges (vorzugsweise, wenn bereits durchgeführt, seit einem Belagwechsel) bereitgestellt und ausgewertet.

Die Ermittlung der Bremsenergie kann dabei auf verschiedene Weise erfolgen, so nach der eingangs beschriebenen Art der DE 101 50 047 A1 oder der DE 199 33 961 A1. Die umgesetzte Bremsenergie entspricht im Wesentlichen dem Energieeintrag bei den Bremsungen.

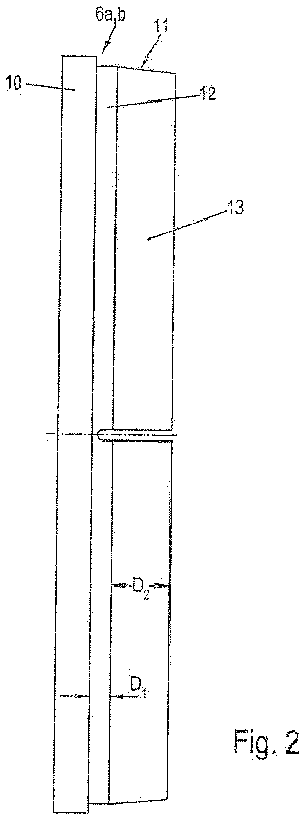

**Fig. 2** zeigt einen vorteilhaften Bremsbelag 6a bzw. b für ein Bremssystem eines Fahrzeugs mit wenigstens einer oder mehreren Scheibenbremsen 1 bis 4. Dieser ist vorteilhaft für das erfindungsgemäße Verfahren geeignet. Der Bremsbelag 6a ist im noch nicht verschlissenen Zustand dargestellt.

Der Bremsbelag 6a weist eine Belagträgerplatte 10 auf, auf der ein Reibbelag 11 angeordnet ist. Der Reibbelag 11 besteht aus wenigstens zwei Reibmaterialschichten 12, 13, die verschiedene Reibwerte aufweisen und z.B ganz oder teilflächig aus verschiedenen Materialien bestehen können. Die erste Reibmaterialschicht 12 ist direkt auf der Belagträgerplatte 10 angeordnet. Auf ihrer von der Trägerplatte 1 abgewandten Seite ist die zweite Reibmaterialschicht 13 angeordnet.

Vorzugsweise ist die Dicke D1 der zwischen der Belagträgerplatte 10 und der zweiten Reibmaterialschicht 13 ersten Reibmaterialschicht 12 kleiner als die Dicke D2 der zweiten (äußeren) Reibmaterialschicht 13. Die Dicke D1 der inneren Reibmaterialschicht 12 entspricht vorzugsweise einem Endverschleißmaß. Dies ist ein Maß, an dem auf der Trägerplatte 10 zwar noch eine Restschicht an Belagmaterial vorhanden ist, bei dessen Erreichen aber umgehend oder aber zumindest innerhalb eines vorgegebenen Rest-Kilometerintervalls ein Belagwechsel durchzuführen ist, damit im weiteren Betrieb nicht ein betriebsgefährdender Zustand erreicht wird.

Vorzugsweise ist daher die Dicke D2 der äußeren Reibmaterialschicht 13 derart bemessen, dass bei Erreichen des Endverschleißmaßes die äußere Reibmaterialschicht 13 vollständig verschlissen ist. Damit ist das Erreichen dieses Zustandes ein geeigneter Indikator, um dem Fahrer die Notwendigkeit eines bald notwendigen Belagwechsels anzuzeigen. Es stellt ist daher vorteilhaft, auf einfache Weise das Erreichen dieses Zustandes zu detektieren, und zwar vorzugsweise einzeln bezogen auf jeden Bremsbelag eines Fahrzeugs.

Moderne Informationssysteme im Fahrzeug - siehe die eingangsgenannte - DE 101 50 047 A1 - verarbeiten heute eine Vielzahl an Daten und Meßgrößen, welche einerseits zur Information des Fahrers und/ oder des Fahrzeugbetreibers z.B. zur Planung von Serviceintervallen verwendet werden können, andererseits aber auch zur Vereinfachung der Diagnose in Servicewerkstätten im Falle von Fehlfunktionen dienlich sind. Damit ist eine Verschleißauswertung möglich. Wird diese Verschleißauswertung auf die beim Bremsen umgesetzte Energie bezogen, kann über die Information der zurückgelegten Fahrtstrecke auch ein spezifischer Verschleiß der Bremsbeläge 6a, b der Scheibenbremsen 1 - 4, bezogen auf die Laufleistung in Form eines Steigungsgradienten, ermittelt werden und im Speicher des Fahrzeugs hinterlegt werden.

Mittels dieser Information kann z.B. auch eine Voraussage über die noch zur Verfügung stehenden Lebensdauer der Bremsbeläge errechnet werden. Nach einer definierten Fahrtstrecke oder Nutzungsdauer des Fahrzeugs erfolgt ein Vergleich des hinterlegten Verschleißgradienten mit dem neuen aktuellen Gradienten. Sollte hier eine signifikante Änderung festgestellt werden, so kann die Fahrzeugelektronik eine entsprechende, frei zu definierende Aktion einleiten, z. B. dem Fahrer eine Warnmeldung ausgeben.

Um das Erreichen des Endverschleißmaßes der Bremsbeläge durch das beschriebene Verfahren zu erkennen, werden Bremsbeläge 9a, b verbaut, deren Reibbelag 10 beispielsweise nach Art der **Fig. 2** beschaffen ist. Die äußere Reibmaterialschicht 13 weist dabei sinnvollerweise die Dicke D2 auf, bei deren Verschleiß das Endverschleißmaß erreicht ist. Bei Bedarf kann der Bremsbelag 9a, b auch mehr als zwei Reibmaterialschichten 12, 13 aufweisen (nicht dargestellt), wobei diese Reibmaterialschichten 12, 13 aus zwei unterschiedlichen Materialzusammensetzungen bestehen können, welche dann z.B. abwechselnd verpresst werden, oder auch aus mehreren unterschiedlichen Materialien, um den Verschleißverlauf noch feiner auflösen zu können, wodurch z. B. die Qualität einer möglichen Lebensdauervoraussage der Bremsbeläge erhöhen würde. Anzumerken ist, dass Bremsbeläge, welche aus mehreren Reibmaterialschichten 12, 13 aufgebaut sind, an sich aus dem Stand der Technik bekannt sind. Es wurden aber nicht deren wesentliche Vorteile im Zusammenhang mit einer Verschleißüberwachung erkannt.

Wird die Verschleißauswertung mit Hilfe der Verschleißsensoren 7 auf die beim Bremsen umgesetzte Energie bezogen, werden Einflüsse wie ein sich veränderndes Fahrverhalten und dgl. weitgehend ausgeblendet. Über die Information der zurückgelegten Fahrstrecke kann derart ein spezifischer Verschleiß, bezogen auf die Nutzungsdauer der Bremsbeläge in Form eines Steigungsgradienten berechnet werden.

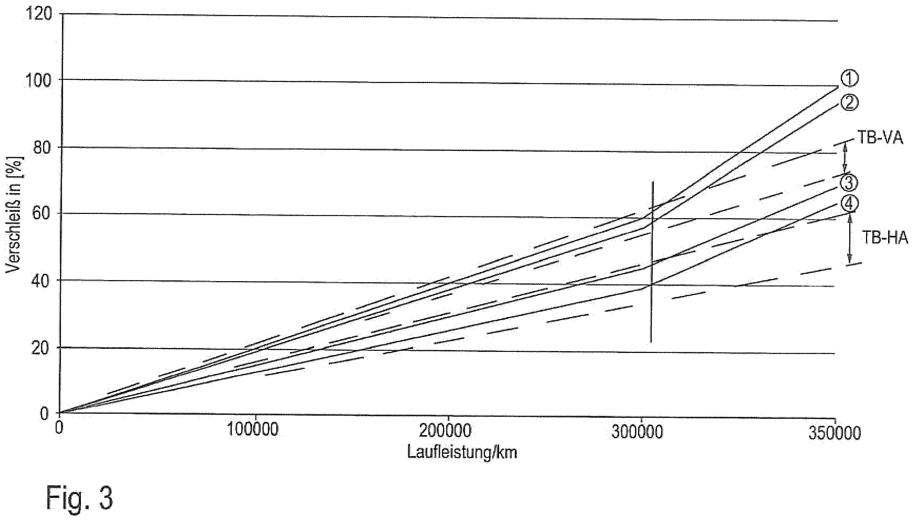

Wie in **Fig. 3 bis 8** abgebildet, ergibt sich je Rad bzw. je Scheibenbremse pro Rad jeweils eine Kurve, insbesondere zumindest abschnittsweise eine Gerade, deren Steigung bzw. Gradient für das jeweils eingesetzte Reibmaterial spezifisch ist. Wechselt daher die Steigung, weist dies beispielsweise auf einen Wechsel im Reibmaterial bzw. des Reibwertes hin.

Vorzugsweise erfolgt eine Ausgabe eines Signales an einem Ausgabegerät zumindest dann, wenn sich die Steigung über wenigstens einen vorgegebenen festen oder variablen Grenzwert hinaus ändert. Derart wird sichergestellt, dass die aufgetretenen Änderungen auch so signifikant sind, dass eine Signalausgabe erforderlich ist. Besonders bevorzugt wird dies dadurch umgesetzt, dass im Schritt f) eine Ausgabe eines Signales an einem Ausgabegerät zumindest dann erfolgt, wenn sich die Steigung über einen Toleranzbereich oder ein Toleranzband TB-VA oder TB-HA hinaus ändert. Der Toleranzbereich kann konstant sein oder sich mit zunehmender Kilometerleistung verändern, z.B. linear vergrößern.

Beim Überschreiten der Grenze von einer Reibmaterialschicht 13, 12 zur anderen erkennt das Bremssystem über den Schritt d) bzw. ein Vergleichen der Verschleißgradienten eine Änderung. Vorzugsweise wird dann eine definierte Aktion ausgelöst.

Im Falle eines zweifach geschichteten Reibmaterials mit Reibmaterialschichten 12, 13, wobei die Dicke D1 der direkt an die Belagträgerplatte angrenzenden Reibmaterialschichten 12 annähernd dem Endverschleißmaß entspricht, kann der Übergang zwischen den zwei Materialen durch die Gradientenänderung erkannt und dem Fahrer angezeigt werden, beispielsweise an einem Bildschirm oder dgl. (Figuren 3 - 8). Dies ersetzt die Funktion eines bekannten Kabelverschleißsensors (Endkontaktsensor).

**Fig. 3** zeigt ein Diagramm, in dem ein Verschleiß in % gegenüber der Laufleistung als Fahrstreckeninformation (seit dem letzten Belagwechsel) aufgetragen ist.

Der Verschleiß in % ist dabei ein Wert, der beispielsweise aus dem Quotienten eines Verschleißmesswertes und der Berechnung des Energieeintrag bei Bremsungen, bestimmt wird. Dieser Wert wird aufsummiert gegenüber der Laufleistung aufgetragen. Die sich ergebende Kurve zeigt, dass sich ab (bzw. beim) Erreichen einer bestimmten Kilometerleistung (ca. 300000 km) an sämtlichen vier Scheibenbremsen 1 - 4 der zwei Achsen 5a, b eines Fahrzeugbremssystems der Verschleißgradient ändert, was anzeigt, das sich das Verhältnis zwischen dem Verschleißmesswert und dem Wert aus der Berechnung des Energieeintrags geändert hat. Dies zeigt einen Übergang von der äußeren Reibmaterialschicht 13 zu der inneren Belagmaterialschicht 12 an. Das Endverschleißmaß ist erreicht. Es wird eine Warnung (sofort oder jedenfalls innerhalb eines vorgegebenen Laufleistungsintervalls) ausgegeben.

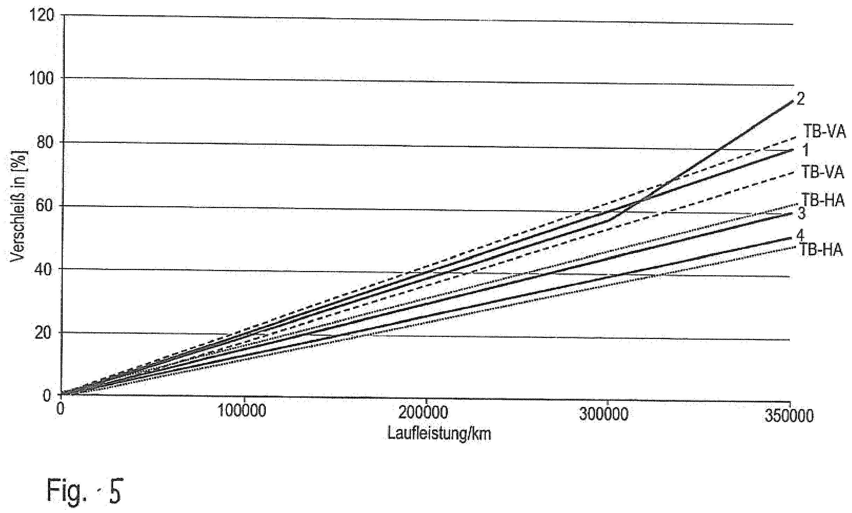

Eingezeichnet sind in **Fig.** 3 zudem ein Toleranzband TB-VA für die Vorderachse und ein Toleranzband TB-HA für die Hinterachse. Lediglich, wenn die Kurven außerhalb des zugehörigen Toleranzbandes TB-VA oder TB-HA führen, ist eine Anzeige eines Warnsignals erforderlich (hier bei ca. 300.000 km). Entsprechende Toleranzbänder TB-VA und TB-HA gibt es auch in den **Fig. 5, 6, 7 und 8.** Die Spanne der Toleranzbänder TB-VA und TB-HA nimmt hier mit zunehmender Kilometerlaufleistung (gemessen ab dem letzten Belagwechsel) zu, was bevorzugt, nicht aber zwingend ist.

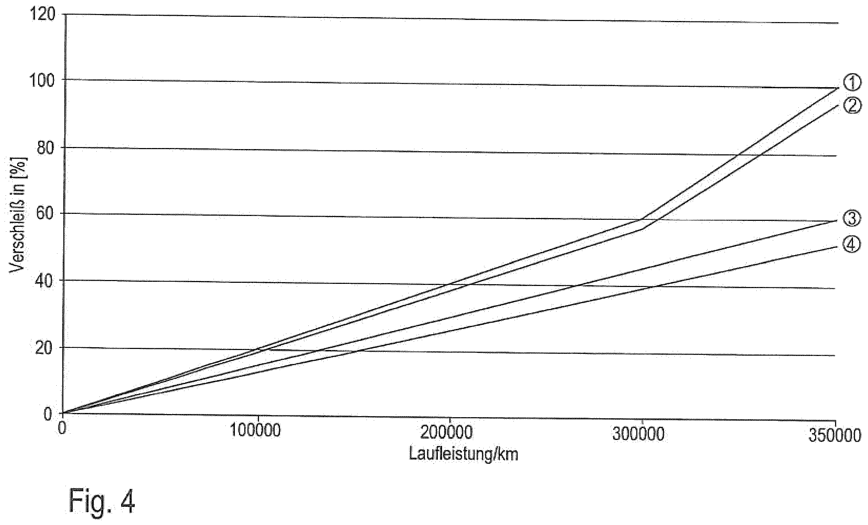

**Fig. 4** zeigt, dass sich ab (bzw. beim) Erreichen einer bestimmten Kilometerleistung (ca. 300000 km) lediglich an den zwei Scheibenbremsen 1 - 2 der Vorderachse eines Fahrzeugbremssystems der Verschleißgradient ändert. Dies zeigt an dieser Achse einen Übergang von der äußeren Reibmaterialschicht 13 zu der inneren Belagmaterialschicht 12 an. Das Endverschleißmaß an der Vorderachse 5a ist hier vor dem Erreichen des entsprechenden Maßes an der Hinterachse 5b erreicht. Es wird eine Warnung (sofort oder jedenfalls in einem vorgegebenen Laufleistungsintervall) nach einem Erreichen von einem oder beiden Toleranzbändern TB-HA und/oder TB-VA ausgegeben.

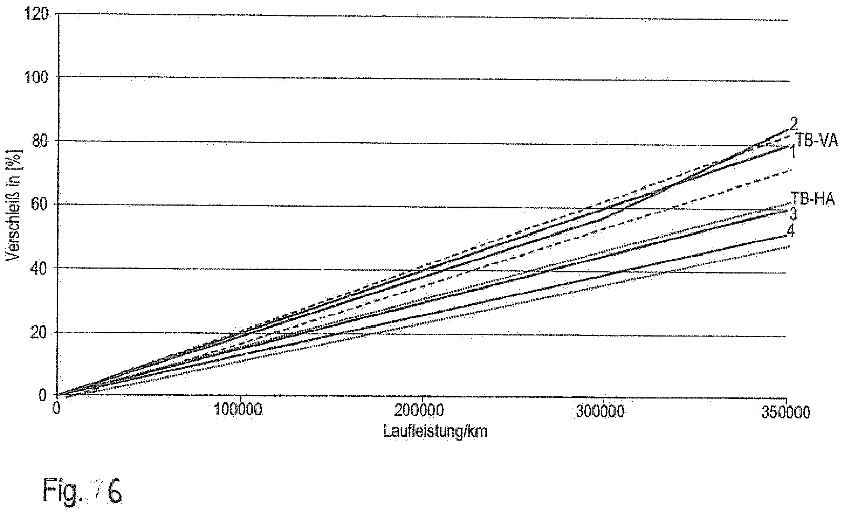

**Fig. 5 und 6** zeigen, dass sich ab (bzw. beim) Erreichen einer bestimmten Kilometerleistung (ca. 300000 km) nur an einer der zwei Scheibenbremsen 2 der Vorderachse eines Fahrzeugbremssystems der Verschleißgradient ändert, wobei die Änderung in **Fig. 5** stärker als in **Fig. 6** ist.

Aus **Fig. 5** und **6** ist jeweils ersichtlich, dass lediglich an einer der Scheibenbremsen - die Scheibenbremse 2 - dieser Achse 5a - hier die Vorderachse - ein Übergang von der äußeren Reibmaterialschicht 13 zu der inneren Belagmaterialschicht 12 erfolgt ist. Das Endverschleißmaß ist also an der Scheibenbremse 2 der Vorderachse 5a bereits erreicht worden. Daher wird auch hier eine Warnung (sofort oder jedenfalls in einem vorgegebenen Laufleistungsintervall) ausgegeben. Denn eine Änderung des Verschleißgradienten ergibt sich auch, wenn nur einer der Bremsbeläge in der Scheibenbremse sein Endverschleißmaß erreicht. **Fig. 5** zeigt, wie dies bei starker einseitiger Schmutzbelastung der Fall sein kann oder z. B. bei einer Fehlfunktion in der Scheibenbremse, wie z. B. einer defekten Sattelführung. So kann verhindert werden, dass ein Belag komplett verschleißt und im ungünstigsten Fall zwischen Bremsscheibe und -träger durchgezogen werden würde. Die bekannte Summenverschleißerkennung kann diese Fehlfunktion in der Regel nicht erkennen.

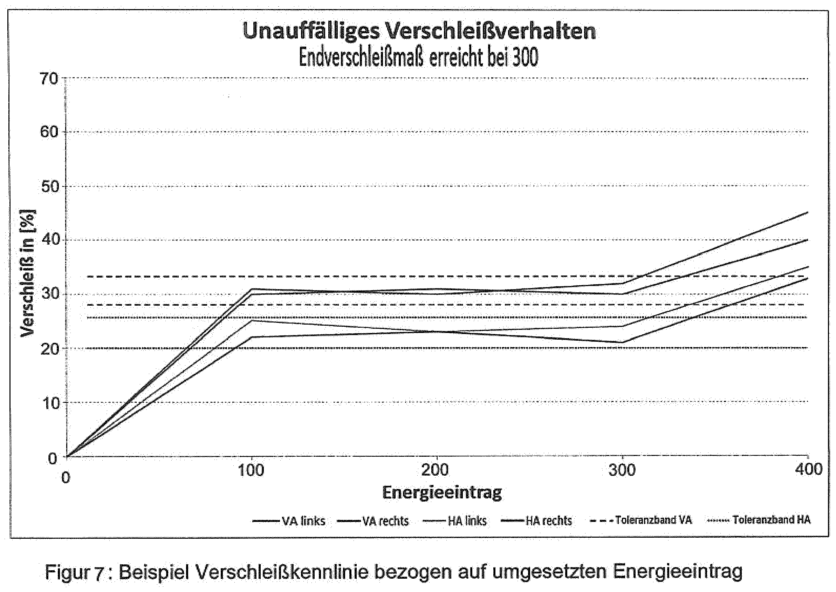

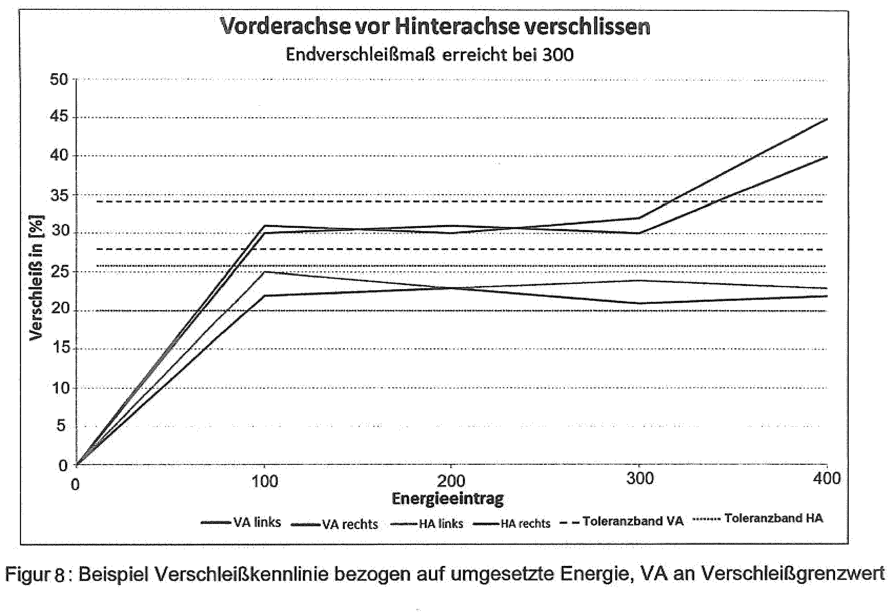

**Fig. 7** bzw. **Fig. 8** zeigen analoge Darstellungen zu **Fig. 3 bzw. 4,** in welchen aber jeweils der Verschleißgrad über dem Energieeintrag aufgetragen ist. Es ergibt sich eine Konstante bzw. eine Gerade mit einer Steigung Null. Ein Abweichen von dieser Steigung Null führt wie in **Fig. 3 und 4** wiederum aus einem Toleranzband TB-HA und/oder TB-VA und zu einem Warnsignal.

BEZUGSZEICHENLISTE

| | |
|---|---|
| 1 | Scheibenbremse |
| 2 | Scheibenbremse |
| 3 | Scheibenbremse |
| 4 | Scheibenbremse |
| 5a, b | Achsen |
| 6a, b | Bremsbelag |
| 7 | Verschleißsensoren |
| 8 | Kabel |
| 9 | Auswertungseinrichtung |
| 10 | Belagträgerplatte |
| 11 | Reibbelag |
| 12, 13 | Reibmaterialschichten |
| 14 | Polradsensoren |
| 15 | Drucksensor |

**Patentansprüche**

1.  Verfahren, mit dem eine Analyse des Verschleißverhaltens von Bremsbelägen eines Bremssystems durchgeführt wird, das wenigstens eine oder mehrere Bremsen aufweist, der/die mit jeweils einem oder mehreren Bremsbelägen (6a, 6b) versehen ist/sind, der/die eine Belagträgerplatte (10, 11) und einen Reibbelag aus wenigstens zwei oder mehr Reibmaterialschichten (12, 13) aufweist/aufweisen, deren Reibwert unterschiedlich ist, und das wenigstens eine Auswertungseinrichtung (8) aufweist, mit zumindest folgenden Schritten

    a) Bereitstellen des Bremssystems;
    b) Ermitteln des bei Bremsungen umgesetzten Verschleißes je Bremse mit wenigstens einem Verschleißsensor je Bremse;
    c) Ermitteln der bei Bremsungen umgesetzten Bremsenergie je Bremse mit der Auswertungseinrichtung;
    d) wiederholtes Ermitteln einer momentanen Steigung einer Kurve, welche die in den Schritten b) und c) ermittelten Werte und eine Fahrtstreckeninformation zueinander in Bezug setzt; und
    e) Ausgabe eines Signales an einem Ausgabegerät, wenn sich die Steigung verändert.

2.  Verfahren nach Anspruch 1, **dadurch gekennzeichnet, dass** im Schritt f) eine Ausgabe eines Signales an einem Ausgabegerät zumindest dann erfolgt, wenn sich die Steigung über einen vorgegebenen Grenzwert hinaus ändert.

3.  Verfahren nach Anspruch oder 2, **dadurch gekennzeichnet, dass** im Schritt f) eine Ausgabe eines Signales an einem Ausgabegerät zumindest dann erfolgt, wenn sich die Steigung über einen Toleranzbereich oder ein Toleranzband hinaus ändert.

4.  Verfahren nach einem der vorstehenden Ansprüche, **dadurch gekennzeichnet, dass** sämtliche der Bremsbeläge (6a, 6b) die Belagträgerplatte (10, 11) und den Reibbelag aus wenigstens zwei oder mehr Reibmaterialschichten (12, 13) aufweist/aufweisen.

5.  Verfahren nach einem der vorstehenden Ansprüche, **dadurch gekennzeichnet, dass** die Dicke (D1) wenigstens einer der Reibmaterialschichten (12, 13) des wenigstens einen Bremsbelages (6a, 6b) einem Endverschleißmaß dieses Bremsbelages entspricht und dass ein Signal ausgegeben wird, wenn das Erreichen dieses Endverschleißmaßes erkannt wird.

6.  Bremssystem zur Durchführung des Verfahrens nach einem oder mehreren der vorstehenden Ansprüche, mit zumindest folgenden Merkmalen:

    a) Bereitstellen eines Bremssystems mit wenigstens einer oder mehreren Bremsen mit jeweils einem oder mehreren Bremsbelägen (6a, 6b), der/die eine Belagträgerplatte (10, 11) und einen Reibbelag aus wenigstens zwei oder mehr Reibmaterialschichten (12, 13) aufweist/aufweisen, deren Reibwert unterschiedlich ist, und wenigstens einer Auswertungseinrichtung (8), die dazu ausgelegt ist, das Verfahren nach einem der Ansprüche 1 bis 5 auszuführen.

**7.** Bremssystem nach Anspruch 6, **dadurch gekennzeichnet, dass** die Dicke (D1) wenigstens einer der Reibmaterialschichten (12) des wenigstens einen Bremsbelages einem Endverschleißmaß des Bremsbelages entspricht.

**8.** Bremssystem nach Anspruch 6 oder 7, **dadurch gekennzeichnet, dass** die Dicke einer äußeren der Reibmaterialschichten (12, 13) größer ist als die Dicke (D1) der inneren Reibmaterialschicht.

**9.** Bremssystem nach einem der Ansprüche 6 bis 8, **dadurch gekennzeichnet, dass** die Bremsen Scheibenbremsen sind.

**10.** Bremssystem nach Anspruch 9, **dadurch gekennzeichnet, dass** die Scheibenbremsen als druckluftbetätigte Scheibenbremsen ausgebildet sind.

## Claims

**1.** Method by which an analysis of the wear behaviour of brake linings of a brake system is carried out, said brake system having at least one or a plurality of brakes which is/are in each case connected to one or a plurality of brake linings (6a, 6b) which has/have a lining carrier plate (10, 11) and a friction lining composed of at least two or more friction material layers (12, 13) which have different coefficients of friction, and having at least one evaluation device (8), said method comprising at least the following steps:

a) providing the brake system;
b) determining the wear per brake which occurs during braking by way of at least one wear sensor per brake;
c) determining the braking energy converted shipped per brake during braking by means of the evaluation device;
d) repeatedly determining a momentary gradient in a curve which correlates the values determined in steps b) and c) and preferably route information to each other; and
e) emitting a signal to an output device when the gradient changes.

**2.** Method according to Claim 1, **characterized in that** a signal is emitted at an output device in step f) at least when the gradient exceeds a predefined limiting value.

**3.** Method according to Claim 1 or 2, **characterized in that** a signal is emitted by an output device in step f) at least when the gradient exceeds a tolerance range or a tolerance band.

**4.** Method according to one of the preceding claims, **characterized in that** all of the brake linings (6a, 6b) have the lining carrier plate (10, 11) and the friction lining composed of two or more layers (12, 13).

**5.** Method according to one of the preceding claims, **characterized in that** the thickness (D1) of at least one of the friction material layers (12, 13) in the at least one brake lining (6a, 6b) corresponds to a final wear level of said brake lining and **in that** a signal is emitted when this final wear level is detected.

**6.** Brake system for carrying out the method according to one or more of the preceding claims, having at least the following features:

a) providing a brake system having at least one or a plurality of brakes which is/are in each case connected to one or a plurality of brake linings (6a, 6b) which has/have a lining carrier plate (10, 11) and a friction lining composed of at least two or more friction material layers (12, 13) which have different coefficients of friction, and having at least one evaluation device (8), said brake system being designed to carry out the method according to one of claims 1 to 5.

**7.** Brake system according to Claim 6, **characterized in that** the thickness (D1) of at least one of the friction material layers (12) of the at least one brake lining corresponds to a final wear level of said brake lining.

**8.** Brake system according to Claim 6 or 7, **characterized in that** the thickness of one of the outer friction material layers (12, 13) is greater than the thickness (D1) of the inner friction material layer.

**9.** Brake system according to one of Claims 6 to 8, **characterized in that** the brakes are disc brakes.

**10.** Brake system according to Claim 9, **characterized in that** the disc brakes are configured as pneumatically activated disc brakes.

## Revendications

**1.** Procédé par lequel on effectue une analyse du comportement à l'usure de garnitures de frein d'un système de frein, qui a au moins un frein ou plusieurs freins, qui est/sont pourvu(s) chacun d'une garniture ou de plusieurs garnitures (6a,6b) de frein, qui a/ont une plaque (10, 11) de support de garniture et une garniture de friction en au moins deux ou plusieurs couches (12,13) de matériau de friction, dont le coefficient de friction est différent, et qui a au moins un dispositif (8) d'exploitation, comprenant au moins les stades suivants

a) on se procure le système de frein ;
b) on détermine la transformation de l'usure à des freinages pour chaque frein par au moins un capteur d'usure pour chaque frein ;
c) on détermine la transformation d'énergie de freinage à chaque freinage pour chaque frein par le dispositif d'exploitation ;
d) on détermine de manière répétée une pente instantanée d'une courbe, qui met en relation les valeurs déterminées aux stades b) et c) et une information sur le parcours ;
e) on émet un signal sur un appareil d'émission, si la pente se modifie.

2. Procédé suivant la revendication 1, **caractérisé en ce que**, dans le stade f), il se produit une émission d'un signal sur un appareil d'émission au moins lorsque la pente se modifie au-delà d'une valeur limite donnée à l'avance.

3. Procédé suivant la revendication 1 ou 2, **caractérisé en ce que**, dans le stade f), il se produit une émission d'un signal sur un appareil d'émission, au moins lorsque la pente se modifie au-delà d'une plage de tolérance ou d'une bande de tolérance.

4. Procédé suivant l'une des revendications précédentes, **caractérisé en ce que** l'ensemble des garnitures (6a, 6b) de frein a/ont la plaque (10, 11) de support de garniture et la garniture de friction en au moins deux ou plusieurs couches (12, 13) de matériau de friction.

5. Procédé suivant l'une des revendications précédentes, **caractérisé en ce que** l'épaisseur (D1) d'au moins l'une des couches (12, 13) de matériau de friction de la au moins une garniture (6a, 6b) de frein correspond à une mesure d'usure finale de cette garniture de frein, et **en ce que** l'on émet un signal, si l'on détecte que cette mesure d'usure finale est atteinte.

6. Système de frein pour effectuer le procédé suivant l'une ou plusieurs des revendications précédentes, comprenant au moins les caractéristiques suivantes :

a) on se procure un système de frein ayant au moins un frein ou plusieurs freins, ayant chacun une garniture de frein ou plusieurs garnitures (6a, 6b) de frein, qui a/ont une plaque (10, 11) de support de garniture et une garniture de friction en au moins deux ou plusieurs couches (12, 13) de matériau de friction, dont le coefficient de frottement est différent, et au moins un dispositif (8) d'exploitation, qui est conçu pour effectuer le procédé suivant l'une des revendications 1 à 5.

7. Système de frein suivant la revendication 6, **caractérisé en ce que** l'épaisseur (D1) d'au moins l'une des couches (12) de matériau de friction de la au moins une garniture de frein correspond à une mesure d'usure finale de la garniture de frein.

8. Système de frein suivant la revendication 6 ou 7, **caractérisé en ce que** l'épaisseur de l'une extérieure des couches (12, 13) de matériau de friction est plus grande que l'épaisseur (D1) de la couche intérieure de matériau de friction.

9. Système de frein suivant l'une des revendications 6 à 8, **caractérisé en ce que** les freins sont des freins à disque.

10. Système de frein suivant la revendication 9, **caractérisé en ce que** les freins à disque sont constitués sous la forme de freins à disque à actionnement par l'air comprimé.

Fig. 1a

Fig. 1b

Fig. 2

Fig. 3

Fig. 4

Fig. 5

Fig. 6

**Unauffälliges Verschleißverhalten**
Endverschleißmaß erreicht bei 300

Legende: VA links — VA rechts — HA links — HA rechts — – – Toleranzband VA ······ Toleranzband HA

Figur 7 : Beispiel Verschleißkennlinie bezogen auf umgesetzten Energieeintrag

Figur 8 : Beispiel Verschleißkennlinie bezogen auf umgesetzte Energie, VA an Verschleißgrenzwert

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0590388 B1
- DE 10150047 A1
- DE 19933396 A1
- DE 4316993 A1
- EP 0859164 A1
- DE 19933961 A1